# EUROPEAN PATENT APPLICATION

(11) **EP 3 845 055 A1**
(43) Date of publication of application: **07.07.2021**
(21) Application number: 20217852.1
(22) Date of filing: 30.12.2020
(51) Int. Cl.: A01G 7/04

(54) **METHOD FOR ARTIFICIALLY INFLUENCING THE DIRECTION OF GROWTH OF A PART OF AT LEAST ONE ORNAMENTAL PLANT, DURING THE CULTIVATION OF ORNAMENTAL PLANTS, FOR EXAMPLE ORCHIDS, SYSTEM FOR IMPLEMENTING THE METHOD, AS WELL AS GREENHOUSE PROVIDED WITH SAID SYSTEM.**

(30) Priority: 30.12.2019 NL 2024590
(71) Applicant: A.J.M. de Koning Beheer B.V., 2631 NA Nootdorp (NL)
(72) Inventor: DE KONING, Adrianus Johannes Maria, 2631 NA Nootdorp (NL)
(74) Representative: Algemeen Octrooi- en Merkenbureau B.V.

(57) **Abstract**

The invention relates to a method for artificially influencing the direction of growth of a part of at least one ornamental plant (105), for example a stem or a branch, during the cultivation of ornamental plants (105), for example orchids. The invention also relates to a system (103) for implementing the method as well as a greenhouse (101) for growing ornamental plants (105) that comprises said system (103).

## Description

The invention relates to a method for artificially influencing the direction of growth of a part of at least one ornamental plant, for example a stem or a branch, during the cultivation of ornamental plants, for example orchids. The invention also relates to a system for implementing the method as well as a greenhouse for growing ornamental plants that comprises said system.

It is known, during cultivation of ornamental plants, to allow plant parts to grow in a certain direction by leading at least one part of the plant in a certain direction, for example by means of stakes, or with guides made into a particular shape. A drawback of this known way of leading ornamental plants in order to obtain products with a desired (selling) form is that application of the stakes/guides has to be done by hand, so that the process is relatively labour-intensive and relatively time-consuming. Also, the manual process does not always lead to the desired result. With the manual process there is for example more chance of branch breakage and/or plant damage. In addition, the stakes/guides either remain present in the finished product, which is not preferable from the aesthetic viewpoint, or must if possible be removed from the finished product in a supplementary operation.

Therefore an object of the present invention is to provide a method by which the process for allowing at least one ornamental plant to grow in a certain direction in order to attain a desired (selling) form of the ornamental plant(s) can be carried out relatively efficiently.

This object is achieved with the method as defined in Claim 1.

The method for artificially influencing the direction of growth of a part of at least one ornamental plant, for example a stem or a branch, during the cultivation of ornamental plants, for example such as orchids, makes use of the metered application of ultraviolet radiation with a wavelength less than or equal to 300 nm, wherein the ultraviolet radiation is emitted by means of a light source onto the at least one ornamental plant, wherein the light source is installed on the side of the ornamental plant where the desired direction of growth of the part of the at least one ornamental plant extends. The inventors have established that emitting a predetermined dose of ultraviolet radiation with a wavelength less than or equal to 300 nm from a light source that is set up for putting into operation at a predetermined point relative to the ornamental plant, so that during the treatment the ultraviolet radiation is incident at a predetermined angle on at least one part of the ornamental plant, ensures that the irradiated part of the ornamental plant will grow in a desired direction of growth. The predetermined dose is repeated once either daily, weekly or monthly for a predetermined time and/or at a predetermined distance, wherein the distance may depend on the light source used. The light source may for example be a laser, with which the predetermined dose of ultraviolet radiation is delivered quite specifically to a certain part, wherein the distance between laser and ornamental plant is less important than when using a UV-C light-emitting tube, for example a UV-C TL lamp or a UV-C LED tube. By treating at least one plant part with ultraviolet radiation with a wavelength less than or equal to 300 nm, it was found that the plant part will grow in the direction from which the ultraviolet radiation was supplied. In this way, the direction of growth of the plant part can be controlled and regulated by a grower, so that after the growing process, an ornamental plant can be obtained with the desired final form or selling form without a physical operation having to be carried out by an operator on or near the plant, such as when using stakes/guides. By using ultraviolet radiation, the labour intensiveness in greenhouses for growing ornamental plants can be reduced considerably and the desired shape of the ornamental plant can be achieved better and/or more easily, so that the market value of the ornamental plants can also be increased.

In one aspect, the ultraviolet radiation is emitted by means of the light source onto the at least one ornamental plant in a predetermined direction, wherein the predetermined direction makes an angle between 0-45 degrees with a desired direction of growth of the part of the at least one ornamental plant, wherein at an angle of 0 degrees, the desired direction of growth and the opposite direction in which the ultraviolet radiation is emitted are located on a virtual straight line. The angular range between 0-45 degrees depends on the number of ornamental plants to be treated simultaneously with the light source. If for example there are various ornamental plants that are positioned next to and/or behind one another in an x- and y-direction, and are to be treated simultaneously, the angle between the light source and the desired direction of growth of the plant part will normally be greater than 0 degrees and less than about 45 degrees. At an angle that is too small, in fact insufficient ornamental plants might be reached simultaneously by the light source owing to shading effects, and at an angle greater than 45 degrees, the probability of the ornamental plants growing in the desired direction of growth decreases, so that the desired final form of the ornamental plant might possibly not be reached after the growing process.

For the simultaneous treatment of different plants with ultraviolet radiation, a UV-C light-emitting tube (UV-C TL lamp or UV-C LED tube) may be used. If the light source to be used is a laser, with which the ultraviolet radiation is emitted, the ornamental plants can be treated individually.

In a further aspect, the ultraviolet radiation with a wavelength less than or equal to 300 nm can be emitted continuously or pulsed during an illumination period of the at least one ornamental plant. The continuous or pulsed treatment in an illumination period will be dependent on the type of ornamental plant for which it is desired that a part grows in a certain direction of growth. The ultraviolet radiation, with which the desired direction of growth in a part of the plant is to be regulated, has in particular a wavelength between 100-280 nm, i.e. UV-C light, preferably UV-C light with a wavelength between 230-280 nm.

Distance, the type of light source as well as power of the light source(s) and time are parameters for regulating the ultraviolet radiation dose, expressed as the number of millijoules received by the ornamental plant per square centimetre (mJ/cm²). The dose of ultraviolet radiation incident on at least one part of the at least one ornamental plant is between 45-1100 mJ/cm², preferably between 45-920 mJ/cm². In a number of tests that were carried out, a dose of ultraviolet radiation of less than 45 mJ/cm² seemed to have no effect regarding alteration of the direction of growth of at least one part of the plant, whereas a dose greater than 1100 mJ/cm² damages the plant irreversibly, wherein the likelihood of minimally visible damage of the ornamental plant at a dose from 920 mJ/cm² not being excluded completely depends on the type of ornamental plant, so that in order to exclude the likelihood of damage, a dose between 45-920 mJ/cm² is to be recommended, based on the experiments carried out.

The method described above can in particular be used effectively when growing large numbers of ornamental plants in horticulture under glass, for influencing the final form of the ornamental plant after the growing process. For example, when growing orchids, the growing process of the branches and/or flowers can be influenced by means of the method described herein in such a way that no or fewer (large) stakes/guides are necessary for growing the orchid in the desired shape. Besides the use of ultraviolet radiation for a relatively limited time (depending on the dose received by the plant, at most one or two hours per day), for growing ornamental plants in horticulture under glass, use is made of assimilation illumination, i.e. application of artificial light for growing plants. The assimilation illumination is instead of sunlight or supplementary to sunlight, so that the plants can assimilate longer.

The invention is also based on the object of providing an efficient and/or improved system for growing ornamental plants in a desired form. For this purpose as well as for carrying out the method described above, the system is provided with at least one ornamental plant as well as at least one light source for metered delivery of ultraviolet radiation with a wavelength less than or equal to 300 nm to the ornamental plant, wherein, before activating the light source, the system is configured to position the light source on the side of the ornamental plant where the desired direction of growth of the part of the at least one ornamental plant extends.

By means of said system, ornamental plants can be provided with a desired form in a labour-extensive as well as efficient manner. The system is configured, before activating the light source, to position the light source on that side of the ornamental plant, such that after activating the light source, the light source is positioned on the side of the ornamental plant where the desired direction of growth of the part of the at least one ornamental plant extends.

The at least one light source may be a laser, with which a dose of ultraviolet radiation is to be emitted, directed onto an ornamental plant. A laser may for example be preferred if the emission of ultraviolet radiation with a wavelength less than or equal to 300 nm onto a particular ornamental plant requires a relatively accurate dose for influencing the direction of growth. The advantage is that by means of a laser, said dose can be attained quite accurately in a relatively short treatment time, so that after the relatively short treatment time, the next ornamental plant can be treated by means of the laser. Moreover, the at least one light source can be a UV-C light-emitting tube, for example a UV-C TL lamp or an LED tube. By means of a UV-C light-emitting tube, more than one ornamental plant can be treated simultaneously.

In one aspect, the system comprises a displacement mechanism for moving the at least one ornamental plant and the at least one light source relative to one another. By means of the displacement mechanism, the light source or the at least one ornamental plant can be moved relative to one another in such a way that the light source can be set up on the side of the ornamental plant where the desired direction of growth of the part of the at least one ornamental plant extends. In this way, the ultraviolet radiation can be emitted by means of the light source onto the at least one ornamental plant in a predetermined direction, wherein preferably the predetermined direction makes an angle between 0-45 degrees with a desired direction of growth of the part of the at least one ornamental plant, wherein at an angle of 0 degrees the desired direction of growth and the opposite direction in which the ultraviolet radiation is emitted are located on a virtual straight line.

The displacement mechanism may comprise a displacement unit, by means of which ornamental plants are to be moved batchwise in a direction of movement, wherein owing to the movement of the ornamental plants, the ornamental plants are to be irradiated batchwise by means of the at least one light source. By means of the displacement unit, the ornamental plants can follow a predetermined route through a greenhouse or -houses, in which the conditions between sections in the greenhouse or between greenhouses can be varied depending on the growth stage. Illumination with ultraviolet radiation for controlling the direction of growth may only be required in one stage or a number of stages of the growing process to obtain the desired form of the ornamental plant, wherein the light source or light sources are positioned along the route in such a way as to provide the desired effect with respect to the direction of growth for the final form of the ornamental plant that is to be achieved. The light source or light sources may occupy a fixed position along the route or their position may be adjusted for reaching or altering the desired direction of growth in order to achieve the desired final form of the ornamental plant.

It is also possible for the light source or light sources in the system to be provided with one or a number of optical aids such as filters, lenses, mirrors, screens etc. for optimum illumination of a part of an ornamental plant or parts of for example ornamental plants placed in a row, with the ultraviolet radiation. With these optical aids, the ultraviolet radiation that is emitted to the environment other than the part of the ornamental plant or parts of the ornamental plants placed in a row to be illuminated may optionally be minimal or even zero. In this way, the ornamental plants can be illuminated with the ultraviolet radiation relatively accurately by means of the light source(s).

Additionally or alternatively, the displacement mechanism comprises a light source displacement unit, by means of which the at least one light source can be placed in a desired position relative to the at least one ornamental plant. By means of the light source displacement unit, the at least one light source can for example be placed in the desired position all around the direction of movement of the batchwise-displaced ornamental plants.

Finally, it is an object of the present invention to provide a greenhouse for growing ornamental plants in a protected and controllable environment, for growing ornamental plants in a desired form in an efficient and/or improved manner. This object is achieved by providing the greenhouse with a system described above. "Greenhouse" means herein a structure for growing plants in a protected and controllable environment. For the growing process of the ornamental plants, the greenhouse may be provided with fittings for assimilation lighting, for example fittings for LED assimilation lighting.

The aspects described above will be explained hereunder on the basis of embodiment examples in combination with the figures. The invention is not, however, limited to the embodiment examples described hereunder. Rather, a number of variants and modifications are possible, which also make use of the idea of the invention and consequently come within the scope of protection. In particular, the possibility is mentioned of combining the features/aspects that are only stated in the description and/or are shown in the figures with the features in the claims in so far as compatible.
Fig. 1 shows schematically a greenhouse with a first embodiment of a system for growing ornamental plants;
Fig. 2 shows schematically a greenhouse with a second embodiment of a system for growing ornamental plants;
Fig. 3 shows a table with the results of an experiment.

In the figures, the same components are provided with the same reference signs.

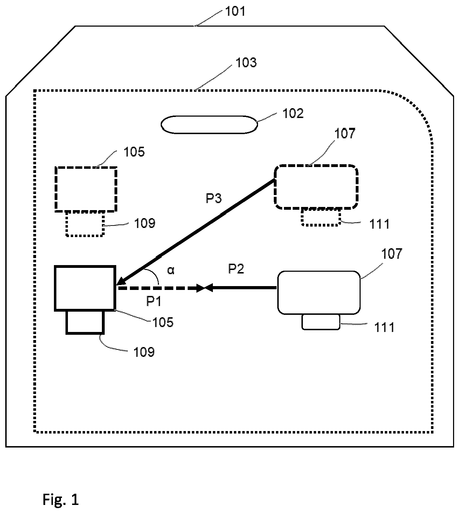

Fig. 1 shows a greenhouse 101 for growing ornamental plants in a protected and controllable environment, said greenhouse 101 comprising a system 103 shown with a dotted line. The greenhouse 101 or the system 103 is provided with fittings for assimilation lighting 102, for example fittings for LED assimilation lighting.

The system 103 is provided with at least one ornamental plant 105, preferably a number of ornamental plants 105, as well as at least one light source 107 for metered delivery of ultraviolet radiation with a wavelength less than or equal to 300 nm to the ornamental plant(s) 105. Before activating the light source 107, the system 103 is configured to position the light source 107 on the side of the ornamental plant 105 where the desired direction of growth (in Fig. 1, the desired direction of growth is indicated by the dotted arrow P1) of the part of the at least one ornamental plant 105 extends, which in the schematic cross-sectional view shown of the system 103 is the right-hand side relative to the ornamental plant 105. The light source 107 is a laser, with which a dose of ultraviolet radiation is emitted, directed at an ornamental plant 105.

The system 103 comprises a displacement mechanism 109, 111 for moving the ornamental plants 105 and the light source 107 relative to one another. As shown in Fig. 1 with dotted lines, the ornamental plants 105 are moved by means of the displacement mechanism 109 from an original position to the position shown with a solid line in Fig. 1. The same applies to the light source 107 shown with a dotted line in Fig. 1, which is moved by the displacement mechanism 111 to the position shown with a solid line in Fig. 1. By means of the system 103, a method is to be carried out for artificially influencing the direction of growth of a part of at least one ornamental plant 105, for example a stem or a branch, during cultivation of ornamental plants 105, for example orchids, by the metered use of ultraviolet radiation with a wavelength less than or equal to 300 nm, wherein the ultraviolet radiation is delivered by means of the light source 107 to the at least one ornamental plant 105, wherein the light source 107 is set up on the side (on the right in Fig. 1) of the ornamental plant 105 where the desired direction of growth of the part of the at least one ornamental plant 105 extends. In Fig. 1, the desired direction of growth is shown with the dotted arrow P1.

As shown in Fig. 1, the ultraviolet radiation can be delivered by means of the light source 107 to the at least one ornamental plant 105 in a predetermined direction in order to achieve the desired direction of growth P1 of a part of the plant. The predetermined direction may for example make an angle α between 0-45 degrees with the desired direction of growth of the part of the at least one ornamental plant 105, wherein at an angle of 0 degrees, as shown with arrow P2, the desired direction of growth P1 and the opposite direction P2 in which the ultraviolet radiation is emitted are located on a virtual straight line. In Fig. 1, the predetermined direction from the light source 107 in the original position thereof, relative to the ornamental plant 105 moved by means of the displacement mechanism 109, is shown with arrow P3, wherein the angle α is preferably at most 45 degrees, to control the direction of growth of the relevant part of an ornamental plant 105.

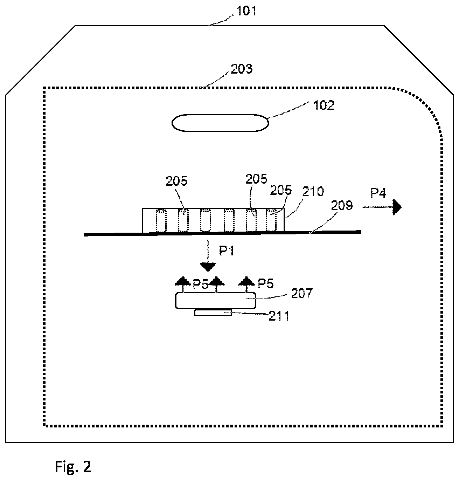

In Fig. 2, the greenhouse 101 is shown with a second embodiment of the system 203 (shown with a dotted line). The system 203 shown in Fig. 2 comprises a displacement mechanism in the form of a displacement unit 209, with which a tray 210 with ornamental plants 205 can be moved batchwise in a direction of movement shown by arrow P4. Although only a single tray 210 is shown in Fig. 2, the system 203 may comprise various trays 210. In the system 203, the light source 207 is a UV-C light-emitting tube, for example a UV-C TL lamp or a UV-C LED tube. Through batchwise movement of the ornamental plants 205, the ornamental plants can receive metered illumination by means of the light source 207 with the ultraviolet radiation coming from the light source 207. In the system 203, the displacement mechanism further comprises a light source displacement unit 211, by means of which the light source 207 can be placed in a desired position relative to the tray 210 with ornamental plants 205, i.e. by means of the light source displacement unit 211, the light source 207 is or can be placed in the desired position all around the direction of movement P4 of the batchwise-displaced ornamental plants. In Fig. 2, the desired direction of growth of a part of the ornamental plant 205, is directed on that point of the route of the tray 210, shown by arrow P1, i.e. downwards. The tray 210 is therefore provided with a bottom that lets through the ultraviolet radiation from the light source 207 shown by the arrows P5, for example the tray 210 comprises a grated bottom or a bottom that is made of material that is transparent to ultraviolet radiation. If a direction of growth other than P1 is desired for a part of the ornamental plant or ornamental plants 205, the light source 207 can be moved all around the direction of movement P4 to a new position. Although not shown, the system 203 with the batchwise movable ornamental plants 205 may also be implemented with a light source that is not configured to be movable. Instead of the laser 107, a UV-C light-emitting tube may be used in the system 103, or a laser or a number of lasers may be used in the system 203, instead of the UV-C light-emitting tube 207. The ultraviolet radiation with a wavelength less than or equal to 300 nm may be emitted continuously or pulsed during an illumination period of the at least one ornamental plant. The light source may also be moved for illuminating a portion of the ornamental plants in a tray at a time.

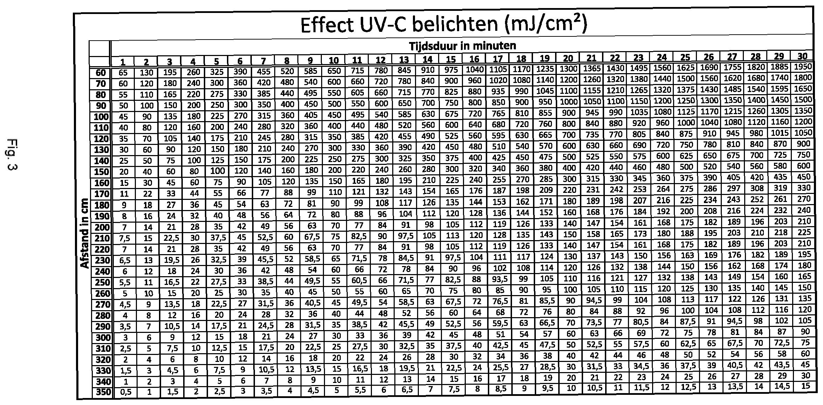

The results of an experiment carried out on a branch of an ornamental plant are presented hereunder. In the experiment, a UV-C light source of 160 W is used, which was placed at different distances between 60 cm and 350 cm with steps of 10 cm relative to the ornamental plant, wherein the ornamental plant was illuminated once for different periods of time, varying from 1 minute to 30 minutes with steps of 1 minute, at an angle of about zero (or 180 degrees) relative to the desired direction of growth of the branch, with ultraviolet radiation with a wavelength less than or equal to 300 nm, more particularly ultraviolet radiation with a wavelength in the range 230-280 nm. Supplementary investigation has shown that ultraviolet radiation with a wavelength less than or equal to 300 nm and greater than 100 nm can produce the same advantageous effects relating to controlling the direction of growth of a part of the ornamental plant. The results of the experiment with the UV-C light source of 160 W with ultraviolet radiation with a wavelength in the range 230-280 nm are shown in the table, presented as Fig. 3. The experiment is just one example, and the results thereof as well as the arrangement used should not limit the claimed scope of protection.

During illumination of the ornamental plant with the aforesaid light source, for an illumination time of 1 minute, a positive effect was measured up to and including a 1-metre distance from the plant, wherein at 1 metre the measured energy on the plant per square centimetre was 45 mJ/cm². Below, in the second column, for each illumination time, the maximum distance is shown at which an advantageous effect in respect of the direction of growth occurred, wherein after (further) increasing the distance between light source and ornamental plant by 10 cm, the effect no longer occurred or in any case was no longer visible as a result of the experiment. At what time and distance the likelihood of damage may occur is recorded in the third column, while the fourth column gives the distances at the different lengths of time, where damage was recorded with all samples (ornamental plants). In the table, "N/A" denotes not applicable, i.e. there is no time in combination with a distance at which the likelihood of damage begins or at which damage was always observed.

| **Time** | **Distance, effect** | **Distance, beginning of min. damage** | **Distance, damage** |
|---|---|---|---|
| **2** | 140cm (50 mJ/cm²) | N/A | N/A |
| **3** | 160cm (45 mJ/cm²) | N/A | N/A |
| **4** | 160cm (60 mJ/cm²) | N/A | N/A |
| **5** | 180cm (45 mJ/cm²) | N/A | N/A |
| **6** | 190cm (48 mJ/cm²) | N/A | N/A |
| **7** | 230cm (46 mJ/cm²) | N/A | N/A |
| **8** | 240cm (48 mJ/cm²) | N/A | N/A |
| **9** | 260cm (45 mJ/cm²) | N/A | N/A |
| **10** | 270cm (45 mJ/cm²) | N/A | N/A |
| **11** | 270cm (50 mJ/cm²) | N/A | N/A |
| **12** | 280cm (48 mJ/cm²) | N/A | N/A |
| **13** | 290cm (46 mJ/cm²) | N/A | N/A |
| **14** | 290cm (49 mJ/cm²) | N/A | N/A |
| **15** | 300cm (45 mJ/cm²) | 60cm (975 mJ/cm²) | N/A |
| **16** | 300cm (48 mJ/cm²) | 70cm (960 mJ/cm²) | N/A |
| **17** | 300cm (51 mJ/cm²) | 80cm (935 mJ/cm²) | N/A |
| **18** | 310cm (45 mJ/cm²) | 80cm (990 mJ/cm²) | 60cm (1170 mJ/cm²) |
| **19** | 310cm (48 mJ/cm²) | 90cm (950 mJ/cm²) | 70cm (1140 mJ/cm²) |
| **20** | 310cm (50 mJ/cm²) | 90cm (1000 mJ/cm²) | 70cm (1200 mJ/cm²) |
| **21** | 310cm (53 mJ/cm²) | 100cm (945 mJ/cm²) | 80cm (1155 mJ/cm² |
| **22** | 310cm (55 mJ/cm²) | 100cm (990 mJ/cm²) | 80cm (1210 mJ/cm²) |
| **23** | 320cm (46 mJ/cm²) | 100cm (1035 mJ/cm²) | 90cm (1150 mJ/cm²) |
| **24** | 320cm (48 mJ/cm²) | 110cm (960 mJ/cm²) | 90cm (1200 mJ/cm²) |
| **25** | 320cm (50 mJ/cm²) | 110cm (1000 mJ/cm²) | 100cm (1125 mJ/cm²) |
| **26** | 320cm (52 mJ/cm²) | 110cm (1040 mJ/cm²) | 100cm (1170 mJ/cm²) |
| **27** | 320cm (54 mJ/cm²) | 120cm (945 mJ/cm²) | 100cm (1215 mJ/cm²) |
| **28** | 320cm (56 mJ/cm²) | 120cm (980 mJ/cm²) | 110cm (1120 mJ/cm²) |
| **29** | 320cm (58 mJ/cm²) | 120cm (1015 mJ/cm²) | 110cm (1160 mJ/cm²) |
| **30** | 330cm (45 mJ/cm²) | 120cm (1050 mJ/cm²) | 110cm (1200 mJ/cm²) |

## Claims

1. Method for artificially influencing the direction of growth of a part of at least one ornamental plant, for example a stem or a branch, during the cultivation of ornamental plants, for example orchids, by the metered use of ultraviolet radiation with a wavelength less than or equal to 300 nm, wherein the ultraviolet radiation is delivered by means of a light source to the at least one ornamental plant, wherein the light source is installed on the side of the ornamental plant where the desired direction of growth of the part of the at least one ornamental plant extends.

2. Method according to Claim 1, wherein the ultraviolet radiation is delivered by means of the light source to the at least one ornamental plant in a predetermined direction, wherein the predetermined direction makes an angle between 0-45 degrees with a desired direction of growth of the part of the at least one ornamental plant, wherein at an angle of 0 degrees the desired direction of growth and the opposite direction in which the ultraviolet radiation is emitted are located on a virtual straight line.

3. Method according to Claim 1 or 2, wherein the ultraviolet radiation with a wavelength less than or equal to 300 nm can be emitted continuously or pulsed during an illumination period of the at least one ornamental plant.

4. Method according to one of the preceding claims, wherein the ultraviolet radiation is UV-C radiation with a wavelength between 100-280 nm, preferably between 230-280 nm.

5. Method according to one of the preceding claims, wherein the dose of ultraviolet radiation incident on at least one part of the at least one ornamental plant is between 45-1100 mJ/cm², preferably between 45-920 mJ/cm².

6. Method according to one of the preceding claims, wherein the ornamental plants are cultivated at least partially with the aid of assimilation illumination.

7. System for implementing the method according to one of the preceding claims, wherein the system is provided with at least one ornamental plant as well as with at least one light source for metered delivery of ultraviolet radiation with a wavelength less than or equal to 300 nm to the ornamental plant, wherein, before activating the light source, the system is configured to position the light source on the side of the ornamental plant where the desired direction of growth of the part of the at least one ornamental plant extends.

8. System according to Claim 7, wherein the at least one light source is a laser, with which a dose of ultraviolet radiation is emitted, directed at an ornamental plant.

9. System according to Claim 7, wherein the at least one light source is a UV-C light-emitting tube, for example a UV-C TL lamp or a UV-C LED tube.

10. System according to one of Claims 7-9, wherein the system comprises a displacement mechanism for moving the at least one ornamental plant and the at least one light source relative to one another.

11. System according to Claim 10, wherein the displacement mechanism comprises a displacement unit, by means of which ornamental plants are moved batchwise in a direction of movement, wherein by moving the ornamental plants, the ornamental plants can receive metered illumination with the ultraviolet radiation batchwise by means of the at least one light source.

12. System according to Claim 10 or 11, wherein the displacement mechanism comprises a light source displacement unit, by means of which at least one light source can be placed at a desired position relative to the at least one ornamental plant.

13. System according to Claims 11 and 12, wherein by means of the light source displacement unit, the at least one light source is installed or can be installed in the desired position all around the direction of movement of the batchwise-displaced ornamental plants.

14. Greenhouse for growing ornamental plants in a protected and controllable environment comprising a system according to at least one of Claims 7-13.

15. Greenhouse according to Claim 14, wherein the greenhouse is provided with fittings for assimilation lighting, for example fittings for LED assimilation lighting.
